# EUROPÄISCHE PATENTSCHRIFT

(11) **EP 2 192 693 B1**
(45) Veröffentlichungstag und Bekanntmachung des Hinweises auf die Patenterteilung: **26.06.2019**
(21) Anmeldenummer: 09172330.4
(22) Anmeldetag: 06.10.2009
(51) Int. Cl.: H04B 1/08, H04N 5/44

(54) **Informations- und Unterhaltungssystem in einem Kraftfahrzeug**
Information and entertainment system in a vehicle
Système d'information et de divertissement dans un véhicule automobile

(30) Priorität: 26.11.2008 DE 102008044078
(43) Veröffentlichungstag der Anmeldung: 02.06.2010
(73) Patentinhaber: Robert Bosch GmbH, 70442 Stuttgart (DE)
(72) Erfinder: Barkowski, Andre, 38271, Baddeckenstedt (DE); Listle, Holger, 31141, Hildesheim (DE); Kersken, Ulrich, 31199, Diekholzen (DE)

(56) Entgegenhaltungen:
- WO-A1-2007/023120
- WO-A2-02/067447
- US-A1- 2003 014 767
- US-A1- 2003 194 977
- US-A1- 2004 141 476
- US-A1- 2006 128 301

## Beschreibung

Die Erfindung betrifft ein Informations- und Unterhaltungssystem in einem Kraftfahrzeug, wobei das System eine Empfangseinrichtung, einen Signalspeicher zur Speicherung mindestens eines mittels der Empfangseinrichtung empfangenen Signals und ein Wiedergabeteil für eine Wiedergabe des empfangenen Signals oder des in dem Signalspeicher gespeicherten Signals aufweist, wobei ein aus mindestens zwei der gespeicherten oder empfangenen Signalen anhand von mindestens einem Wiedergabeparameter eines Nutzerprofils ausgewähltes Signal zur Wiedergabe vorgesehen ist, wobei die Wiedergabe entsprechend eines vorgebbaren Musters erfolgt, welches eine Abfolge von Wiedergabeparametern ist.

### Stand der Technik

Informations- und Unterhaltungssysteme für Kraftfahrzeuge sind aus dem Stand der Technik bekannt. In derzeit am Markt befindlichen Informations- und Unterhaltungssystemen wählt ein Anwender beziehungsweise Nutzer, beispielsweise ein Fahrer des Kraftfahrzeugs, mittels einer Eingabevorrichtung (beispielsweise Stationstasten) eine Signalquelle, z.B. einen gewünschten Rundfunksender aus einer Liste empfangbarer Rundfunksender, aus. Auf diese Weise wird somit ein Signal mittels einer als Rundfunk-Empfangseinrichtung ausgebildeten Empfangseinrichtung empfangen. Anschließend wird das Signal einer Signalqualitätsverbesserung unterworfen und mittels des Wiedergabeteils wiedergegeben. Eine durchgeführte Signalverarbeitung konzentriert sich ausschließlich auf eine Signalqualitätsverbesserung und gibt das Signal der ausgewählten Rundfunkstation inhaltlich unverändert wieder. Zunehmend werden mehrere Rundfunk-Empfangseinrichtungen in den Informations- und Unterhaltungssystemen eingesetzt. Beispielsweise werden mehrere Empfangseinrichtungen für FM, AM und/oder DAB vorgesehen.

Mehrere Rundfunk-Empfangseinrichtungen werden auch genutzt, um verschiedene Informationen aus dem Signal beziehungsweise den Signalen auszukoppeln. Beispielsweise werden von Rundfunkstationen häufig neben einem Radioprogramm auch Verkehrsfunkinformationen, beispielsweise in Form von RDS-TMC, übertragen. Diese verschiedenen Informationen sind dabei allerdings nicht äquivalent, sondern werden für verschiedene Anwendungen verwendet. Darüber hinaus gibt es insbesondere bei digitalem Radio (beispielsweise DAB) Informations- und Unterhaltungssysteme, bei welchen auf Wunsch des Nutzers ein laufendes Programm oder Teile eines Programms in einem Signalspeicher aufgezeichnet werden kann. Der Nutzerwunsch kann beispielsweise durch Betätigung einer Taste an dem Informations- und Unterhaltungssystem angezeigt werden. Die Aufzeichnung erfolgt solange, bis der Nutzer diese beendet, beispielsweise über eine weitere Tastenbetätigung. Somit wird das Signal der Rundfunk-Empfangseinrichtung aufgezeichnet. Währenddessen wird dasselbe Signal mittels des Wiedergabeteils wiedergegeben. Auf diese Weise liegt ein gespeichertes Signal vor, welches der Nutzer nach Wunsch erneut abspielen kann.

Aus der DE 103 13 742 A1 ist auch ein Radio bekannt, welches einen Titelspeicher und eine automatische Senderwahl aufweist, wobei Titeln ein positives oder negatives Attribut zugeordnet wird. Ein Senderwechsel wird automatisch durchgeführt, sobald ein empfangener Musiktitel mit einem positiven oder negativen Attribut detektiert wird. Dabei kann die Umschaltung sowohl zu einem Titel mit einem positiven Attribut hin als auch zur Unterdrückung eines empfangenen Titels mit einem negativen Attribut führen. Trotz dieser Vorkehrungen kann es der Fall sein, dass dem Nutzer nach einem Durchschalten aller Rundfunkstationen kein Programm durchgängig zusagt.

Der Nutzer muss eine bevorzugte Signalquelle festlegen, deren Wiedergabe durch vorher festgelegte andere Quellen mit höherer Priorität unterbrochen werden kann (zum Beispiel stellt ein Telefonanruf die Rundfunkwiedergabe stumm oder eine Fahrempfehlung der Navigationseinheit unterbricht die Wiedergabe eines Signals von einer CD). Dies entspricht einem Multiplexen von Signalquellen. Ein Multiplexen auf inhaltlicher Ebene findet dabei nicht statt. Aus der DE 103 13 742 A1 ist zwar ein inhaltliches Multiplexen von Inhalten bekannt, dieses ist aber reaktiv und nicht durch das das Informations- und Unterhaltungssystem geplant beziehungsweise gesteuert. Nachteilig ist dabei, dass der Nutzer auf die starre Programmstruktur der Signalquelle keinen Einfluss hat. Wenn der Nutzer beispielsweise morgens auf der Fahrt zur Arbeit eine Nachrichtensendung verpasst hat, dann muss er bis zur nächsten Nachrichtensendung warten.

Die bisherigen Informations- und Unterhaltungssysteme in einem Kraftfahrzeug sind also quellen- und nicht inhaltorientiert. Der Nutzer kann nur Signalquellen auswählen und nicht den Inhalt vorgeben aus denen das wiedergebene Signal bestehen soll.

Aus dem Stand der Technik ist zusätzlich die Druckschrift US 2004/0141476 A1 bekannt, welche ein Verfahren und eine Einrichtung zum dynamischen Auswählen von Radiostationen mittels benutzerdefinierten Abspiellisten zeigt.

### Offenbarung der Erfindung

Demgegenüber weist das Informations- und Unterhaltungssystem mit den in Anspruch 1 genannten Merkmalen den Vorteil auf, dass dem Nutzer ein ihm zusagendes Programm bereitgestellt werden kann. Dies wird erfindungsgemäß erreicht, indem das Muster zeitorientiert, und/oder raumorientiert ist, wobei das zeitorientierte Muster die Wiedergabe eines bestimmten Signals zu einer bestimmten Uhrzeit oder nach einer bestimmten Zeit, und das raumorientierte Muster die Wiedergabe des bestimmten Signals bei Erreichen einer bestimmten Position oder einer bestimmten Entfernung von der Position vorsieht. Das mindestens eine Signal der Empfangseinrichtung und/oder der Sende- und Empfangseinrichtung kann auch während der Wiedergabe eines gespeicherten Signals aufgezeichnet und in dem Signalspeicher gespeichert werden. Mittels der Empfangseinrichtung kann beispielsweise das Signal einer Rundfunkstation empfangen werden. Dabei können auch mehrere Empfangseinrichtungen vorgesehen sein, um parallel Signale mehrerer Rundfunkstationen empfangen - und eventuell speichern - zu können. Ebenso kann eine Sende- und Empfangseinrichtung vorgesehen sein, über welche gezielt Kommunikationsverbindungen aufgebaut werden können, insbesondere ein Datendienst (zum Beispiel IP-Radio) verwendet werden kann. Zusätzlich kann eine Dateneinleseeinrichtung vorgesehen sein, welche Signale - in Form von Daten - von Datenträgern einlesen kann.

Mittels des Wiedergabeteils des Informations- und Unterhaltungssystems kann das Signal der Empfangseinrichtung, also beispielsweise das Signal der momentan empfangenen Rundfunkstation, wiedergegeben werden. Zusätzlich oder alternativ kann auch das mindestens eine Signal der Sende- und Empfangseinrichtung und/oder das eingelesene Signal wiedergegeben werden. Ebenso ist die Wiedergabe des mindestens einen gespeicherten Signals vorgesehen. Der Wiedergabeteil kann somit Signale aus verschiedenen Quellen wiedergeben. Der Begriff Signal wird hier in dem Sinn verwendet, als dass ein Signal vorliegt, mit welchem Informationen übertragen und/oder gespeichert werden können. Da es das Ziel der Erfindung ist, dem Nutzer stets ein ihm zusagendes Programm bereitzustellen, soll eine reichhaltige Signalbasis aufgebaut werden, welche eine Vielzahl von gespeicherten Signalen aufweist. Zu diesem Zweck ist es vorgesehen, dass das Signal der Empfangseinrichtung und/oder der Sende- und Empfangseinrichtung und/oder das eingelesene Signal aufgezeichnet und in dem Signalspeicher gespeichert wird. Das gespeicherte Signal kann von dem Wiedergabeteil wiedergegeben werden. Die eingelesenen Signale müssen nicht in dem Signalspeicher gespeichert werden (auch wenn dies vorgesehen sein kann). Es ist vielmehr möglich, dass die eingelesenen Signale ebenfalls als gespeicherte Signale interpretiert werden, solange sich der die Signale aufweisende Datenträger in der Dateneinleseeinrichtung befindet. Zusätzlich oder alternativ kann das eingelesene Signal in dem Signalspeicher gespeichert werden, wenn es mindestens einmal zur Wiedergabe vorgesehen wurde beziehungsweise die Anzahl der Wiedergaben einen bestimmten Wiedergabeschwellenwert erreicht oder überschreitet.

Das Aufzeichnen beziehungsweise Speichern erfolgt auch, während mittels des Wiedergabeteils das mindestens eine gespeicherte Signal und/oder das empfangene und/oder das eingelesene Signal wiedergegeben wird. Das gespeicherte Signal ist somit beispielsweise ein Signal der Empfangseinrichtung, welches bereits aufgezeichnet und gespeichert wurde. Es werden also Signale, nämlich die Signale der Empfangseinrichtung und/oder der Sende- und Empfangseinrichtung, aufgezeichnet und gespeichert, während ein anderes Signal, nämlich das gespeicherte Signal, wiedergegeben wird. Das Aufzeichnen und Speichern erfolgt im Hintergrund und ohne dass der Nutzer einen Aufnahme- beziehungsweise Speichervorgang starten muss, wobei vorteilhafterweise mehrere Empfangseinrichtungen und mehrere Sende- und Empfangseinrichtungen zur Speicherung mehrerer Signale verwendet werden.

Auf diese Weise kann nach kurzer Zeit eine Vielzahl an gespeicherten Signalen vorliegen. Es kann somit anschließend aus den gespeicherten Signalen das gespeicherte Signal ausgewählt werden, welches wiedergegeben werden soll. Es ist somit Kern der Erfindung, den Empfang mittels der Empfangseinrichtung und/oder der Sende- und Empfangseinrichtung und/oder der Dateneinleseeinrichtung von der Wiedergabe mittels des Wiedergabeteils zu entkoppeln. Je mehr Signale gleichzeitig aufgezeichnet werden können, umso größer ist der Signalbestand beziehungsweise die Signalbasis, aus dem/der ein dem Nutzer zusagendes Programm zusammengestellt werden kann. Das Verwenden von mehreren Empfangseinrichtungen kann neben einer Verbesserung der Signalqualität, indem beispielsweise derselbe Sender auf mehreren Frequenzen empfangen wird, auch zu einer Verbesserung des Inhaltes der Signale herangezogen werden, da eine Vielzahl von zur Verfügung stehenden Signalen beziehungsweise Signalquellen einbezogen und in ein einheitliches Programmkonzept eingebunden werden können. Auch die Signalqualität der Ausgabe steigt an, da in Folge von Mehrfachsendungen und alternativen Ausstrahlungen mit geringer Qualität (beispielsweise Knackser in Folge von Mehrwegeempfang) oder bei komplett unterbrochenem Signal (beispielsweise in einem Tunnel) das gespeicherte Signal wiedergegeben werden kann, während Signale minderwertiger Qualität, beispielsweise der Empfangseinrichtung und/oder der Sende- und Empfangseinrichtung, verworfen werden.

Ein weiterer Vorteil liegt in einem größeren Komfort des Nutzers, da diesem die Suche nach einem ihm zusagenden Signal beziehungsweise Inhalt abgenommen wird. Daraus ergibt sich auch eine Erhöhung der Sicherheit des Kraftfahrzeugs, da der Nutzer häufig der Fahrer ist und durch die höhere Qualität des Programms nun deutlich weniger abgelenkt ist. Die Signale können, wenn nötig, in einzelne Einheiten zerlegt werden, die als gespeicherte Signale gespeichert beziehungsweise abgelegt werden. Beispielsweise muss das Signal der Empfangseinrichtung in einzelne Signale in Form von Liedern zerlegt werden. Um dem Nutzer ein ansprechendes Programm zu bieten, wird ein Signal aus mindestens zwei gespeicherten und/oder empfangenen und/oder eingelesenen Signalen ausgewählt. Das ausgewählte Signal wird mittels des Wiedergabeteils wiedergegeben.

Zur Auswahl des Signals wird der Wiedergabeparameter herangezogen. Dieser beschreibt beispielsweise einen Wunsch des Nutzers. Liegt ein Signal vor, welches dem Wiedergabeparameter entspricht, so wird dieses wiedergegeben. Der Wiedergabeparameter ist einem Nutzerprofil und damit einem Nutzer zugeordnet. Das Nutzerprofil kann beispielsweise mehrere Wiedergabeparameter umfassen, die zur Auswahl des wiedergegebenen Signals herangezogen werden können.

Wiedergabeparameter und Nutzerprofil werden beispielsweise einmalig zu Beginn eines Betriebs des Informations- und Unterhaltungssystems festgelegt. Sie können während des Betriebs automatisch oder in Reaktion auf Benutzerinteraktionen mit dem System aktualisiert werden, so dass sich das System auf die Vorlieben des Nutzers einstellt und Signale wiedergibt, die dieser bevorzugt. Das Nutzerprofil ist einem oder mehreren Nutzern zugeordnet.

Eine Weiterbildung der Erfindung sieht vor, dass die Empfangseinrichtung eine Rundfunk-Empfangseinrichtung ist. Mittels der Rundfunk-Empfangseinrichtung kann eine Vielzahl von verschiedenen Signalen aus ungezielt abstrahlenden Signalquellen empfangen werden. Beispielsweise können analoge Radiosender basierend auf dem FM- und/oder AM-Prinzip oder digitale Radiosender, welche nach dem DAB-, DRM-, DVB-, EBOC- oder SIRIUS-Standard arbeiten, empfangen werden. Neben Tonsignalen enthalten die mit der Rundfunk-Empfangseinrichtung empfangenen Signale häufig auch weitere Informationen, welche beispielsweise mittels RDS, Radiotext und/oder TMC übertragen werden.

Eine Weiterbildung der Erfindung sieht vor, dass die Dateneinleseeinrichtung eine USB-Schnittstelle, ein CD- oder DVD-Laufwerk oder ein Kartenleser ist. Das mindestens eine eingelesene Signal liegt über die USB-Schnittstelle, das Laufwerk und/oder den Kartenleser vor. Das Signal kann mittels des Wiedergabeteils wiedergegeben und/oder in dem Signalspeicher gespeichert werden. Der Kartenleser ist beispielsweise ein Kartenleser für SD-Karten (SD: Secure Digital Memory) oder alternative, insbesondere Flash-Speicher basierte, Speicherkarten.

Eine Weiterbildung der Erfindung sieht vor, dass mittels der Sende- und Empfangseinrichtung eine Internet-Verbindung oder eine Funkverbindung herstellbar sind/ist. Über die Internet-Verbindung sind ebenfalls Signale empfangbar. Beispielsweise ein Audiostream (ein gestreamtes Signal) und/oder Daten in Textform. Dazu zählen beispielsweise PodCasts, Feeds und/oder Blogs. Der Audiostream kann beispielsweise von einem Internetradio angeboten werden. Ebenso ist eine Funkverbindung mittels der Sende- und Empfangseinrichtung herstellbar, beispielsweise um gezielt Informationen einzuholen. Darunter fällt beispielsweise das Einholen von Verkehrsinformationen, insbesondere mittels eines Mobiltelefons, das heißt über eine GSM-Funkverbindung.

Eine Weiterbildung der Erfindung sieht vor, dass weitere Geräte, insbesondere mittels der Funkverbindung, mit dem Informationssystem verbindbar sind. Das Informations- und Unterhaltungssystem kann somit Signale weiterer Geräte empfangen und wiedergeben und/oder aufzeichnen und als gespeichertes Signal speichern. Die Geräte sind schnurgebunden verbindbar oder schnurlos über die Funkverbindung angebunden. Das Gerät kann ein über Bluetooth oder WLAN angeschlossenes Mobiltelefon, ein angeschlossenes lokales Gerät wie ein UPnP Mediaserver, iPod und/oder mittels einer Car2X-Verbindung auch ein Auto oder ein Servicepoint sein. Möglich ist auch eine Verbindung zu einem weiteren Gerät in einem Heimnetzwerk, die beispielsweise mittels der Funkverbindung und/oder über eine Internet-VPN-Verbindung - die über die Funkverbindung aufgebaut sein kann - hergestellt ist.

Eine Weiterbildung der Erfindung sieht vor, dass die Funkverbindung eine Bluetooth-, WLAN- oder GSM-Verbindung ist. Es sind somit unterschiedliche Arten von Funkverbindungen vorgesehen. Es können Kurzstreckenfunkverbindungen, wie die Bluetooth-Verbindung, Mittelstreckenfunkverbindungen, wie die WLAN-Verbindung und/oder Verbindungen über ein Mobiltelefon mittels der GSM-Verbindung vorgesehen sein. Dabei kann auch zunächst eine Bluetooth- oder WLAN-Verbindung zu dem Mobiltelefon aufgebaut werden, welches anschließend die GSM-Verbindung herstellt.

Eine Weiterbildung der Erfindung sieht vor, dass das Wiedergabeteil ein Ton- und/oder Bild-Wiedergabesystem aufweist. Das Wiedergabeteil verfügt somit über akustische und/oder visuelle Ausgabegeräte, beispielsweise mindestens einen Lautsprecher, einen Kopfhörer und/oder mindestens einen Bildschirm. Es kann vorgesehen sein, dass das Signal beziehungsweise mehrere Signale der Empfangseinrichtung und/oder der Sende- und Empfangseinrichtung und/oder ein gespeichertes Signal beziehungsweise mehrere gespeicherte Signale sowohl auf dem Ton- als auch dem Bild-Wiedergabesystem beziehungsweise auf mehreren Ton- und/oder Bildwiedergabesystemen wiedergegeben werden. Es kann auch vorgesehen sein, mehrere Signale gleichzeitig mittels des Bild-Wiedergabesystems wiederzugeben, beispielsweise als eine Bild-in-Bild-Darstellung. Vorteilhaft wird dabei ein vom Nutzer präferierter Inhalt als ein großflächiges Hauptbild dargestellt.

Eine Weiterbildung der Erfindung sieht vor, dass dem empfangenen Signal und/oder dem gespeicherten Signal mindestens eine Eigenschaft zugeordnet ist. Das Signal beziehungsweise die Signale können qualifiziert werden. Beispielsweise können Informationen über die Datenrate und/oder Störungen als eine Eigenschaft gespeichert werden. Ebenso ist eine Typisierung als Eigenschaft dem Signal zuordenbar. Dabei erfolgt die Typisierung beispielsweise nach den Kategorien Musik, Verkehrsmeldungen, Nachrichten und/oder Werbung. Je nach Typisierung kann eine weitere Eigenschaftsbestimmung durchgeführt werden. Für Musik kann beispielsweise der Titel, der Interpret, das Genre, die Albumart, und so weiter bestimmt werden. Auch eine Gültigkeit kann mitbestimmt werden. Über diese kann bestimmt werden, ob beispielsweise eine Qualität des Signals ausreichend ist, um mittels des Wiedergabeteils wiedergegeben zu werden. Die Bestimmung der Eigenschaft kann mit bereits vorhandenen Technologien aus dem Bereich der Audio-CD, insbesondere aus dem Bereich der MP3-Konvertierung, beispielsweise mit Hilfe der Gracenote CDDB oder Music DB, realisiert werden. Dies kann ganz oder teilweise in dem Informations- und Unterhaltungssystem, über ein angebundenes Portal oder - auch ergänzend - über ein Austauschmedium (beispielsweise USB-Stick, WLAN, und so weiter) an einem externen Gerät - beispielsweise dem heimischen PC - durchgeführt werden. Auf diese Weise können dem Signal beziehungsweise den Signalen die mindestens eine Eigenschaft sowohl mittels des Informations- und Unterhaltungssystems als auch mit im Wesentlichen beliebigen weiteren Geräten erfolgen.

Eine Weiterbildung der Erfindung sieht vor, dass die Eigenschaft mittels der Empfangseinrichtung oder einer Sende- und Empfangseinrichtung bestimmbar ist. Über diese Typisierung kann festgelegt werden, ob das Signal den Kategorien Musik, Verkehrsmeldung, Nachrichten, Werbung, und so weiter zugeordnet werden kann. Diese Information wird häufig von Rundfunkstationen über ein RDS-Signal beziehungsweise ein Radiotext-Signal ausgestrahlt und kann somit mittels der Empfangseinrichtung empfangen werden. Teilweise ist auf diese Weise auch eine Bestimmung des Titels, des Interpreten, des Genres, der Albumart und so weiter für Musik möglich. Mittels der Sende- und Empfangseinrichtung kann die Eigenschaft ebenfalls bestimmt werden. Beispielsweise sind über eine Internet-Verbindung, die über die Sende- und Empfangseinrichtung aufgebaut wird, die Dienste zur Bestimmung der Eigenschaft erreichbar. Beispiele hierfür sind die Gracenote CDDB oder die Music DB. Auch kann teilweise eine Programminformation der Rundfunkstationen über die Sende- und Empfangseinrichtung erhalten werden, welche zur Bestimmung der Eigenschaft des Signals verwendet werden kann. Somit ist auch auf diese Weise die Typisierung beziehungsweise Bestimmung der Eigenschaft möglich, beispielsweise weil einer bestimmten Uhrzeit ein bestimmter Typ beziehungsweise eine bestimmte Eigenschaft zuordenbar ist.

Eine Weiterbildung der Erfindung sieht vor, dass die Wiedergabe des empfangenen Signals oder des gespeicherten Signals aufgrund der Eigenschaft und des Wiedergabeparameters vorgesehen ist. Die mindestens eine Eigenschaft des Signals wird somit dazu verwendet, um zu bestimmen, ob das empfangene Signal und/oder das gespeicherte Signal wiedergegeben werden soll/sollen. Dies kann beispielsweise aufgrund der Qualifizierung, die festlegt, ob eine ausreichend hohe Datenrate und/oder eine beziehungsweise keine Störung vorliegt, durchgeführt werden. Somit werden lediglich Signale wiedergegeben, welche eine ausreichend hohe Qualität aufweisen. Beispielsweise kann auch vorgesehen sein, dass lediglich Signale mit einer bestimmten Eigenschaft, beispielsweise einem bestimmten Genre für Musik, wiedergegeben werden. Dies kann mittels des Wiedergabeparameters festgelegt sein. Mittels des Wiedergabeparameters kann festgelegt werden, ob das Signal wiedergegeben wird beziehungsweise welche Eigenschaft es für eine Wiedergabe aufweisen muss. Dabei kann zwischen mehreren gespeicherten Signalen umgeschaltet werden. Das heißt, es muss nicht stets das eine gespeicherte Signal wiedergegeben werden, sondern es kann, bei Vorliegen von mehreren gespeicherten Signalen, zwischen diesen gewechselt werden. Die Zusammenstellung wird somit mittels des Wiedergabeparameters beziehungsweise einer Aneinanderreihung mehrerer Wiedergabeparameter gesteuert. Auf diese Weise kann die Zusammensetzung des wiedergegebenen Signals auch unterschiedliche Medienarten, wie beispielsweise Musik, Nachrichten und/oder Verkehrsnachrichten, und deren Häufigkeit berücksichtigt werden. Somit kann eine größere Zufriedenheit des Nutzers mit dem wiedergegebenen Signal erreicht werden, da ihm in Zeiten, in welchen die mittels der Empfangseinrichtung und/oder der Sende- und Empfangseinrichtung empfangenen Signale ihm nicht zusagen, ein alternatives Signal in Form des gespeicherten Signals angeboten werden kann. Sollte dem Nutzer trotz allem ein wiedergegebenes Signal nicht zusagen, beispielsweise ein Musiktitel, so hat er entgegen den aus dem Stand der Technik bekannten Vorgehensweisen die Möglichkeit, dieses zu überspringen. Auch auf fremdsprachliche Anteile, wie beispielsweise Nachrichten, Verkehrsnachrichten, und so weiter während Auslandsaufenthalten, kann reagiert werden. Dies kann beispielsweise erfolgen, indem andere Signale, beispielsweise digitales Radio, Internet oder andere Datendienste herangezogen werden.

Eine Weiterbildung der Erfindung sieht vor, dass der Wiedergabeparameter in Abhängigkeit von einer Fahrsituation gewählt und/oder von einem Nutzer wählbar ist. Das wiedergegebene Signal kann also anhand der Fahrsituation ausgewählt werden. Auf diese Weise kann die Sicherheit erhöht werden. Beispielsweise wird in Situationen erhöhten Stresses des Nutzers, der häufig der Fahrer des Kraftfahrzeugs ist, ein beruhigendes Signal wiedergegeben, beziehungsweise in anderen Situationen ein anregendes Signal. Ein Beispiel für erstere Situation ist beispielsweise Regen und/oder Dunkelheit. Der Wiedergabeparameter ist auch von einer weiteren Person, beispielsweise einem Beifahrer, beeinflussbar. Der Nutzer und/oder die weitere Person kann/können also vorgeben, welche Art von Signal wiedergegeben werden soll. Dabei können auch mehrere Wiedergabeteilparameter, beispielsweise ein Wiedergabeteilparameter des Fahrers und ein Wiedergabeteilparameter der weiteren Person, zu dem Wiedergabeparameter zusammengeführt werden, sodass ein Signal wiedergegeben wird, welches den gemeinsamen Präferenzen entspricht. Bei einem Informations- und Unterhaltungssystem, welches eine momentane Fahrsituation des Kraftfahrzeugs erfasst (beispielsweise Tag/Nacht, Regen, und so weiter), kann der Wiedergabeparameter aufgrund dieser Information gesetzt (beispielsweise in Abhängigkeit eines Stresslevels) und eine Reihenfolge und/oder eine Auswahl der wiedergegebenen Signale somit beeinflusst werden. Ebenso kann die Nutzerpräferenz durch ein oder mehrere Musiktitel, Musikgenre, Interpreten, Abspiellisten, und so weiter beschrieben werden

Eine Weiterbildung der Erfindung sieht vor, dass die Wiedergabe eines in Textform vorliegenden Signals als Sprachsignal über das Ton-Wiedergabesystem vorgesehen ist. Zu diesem Zweck wird beispielsweise ein Text-to-Speech-System verwendet, um das in Textform vorliegende Signal in ein Sprachsignal umzuwandeln und anschließend über das Ton-Wiedergabesystem auszugeben. Auf diese Weise können beispielsweise aus dem Internet empfangene Informationen mittels des Ton-Wiedergabesystems wiedergegeben werden.

Die Erfindung sieht vor, dass die Wiedergabe entsprechend eines, insbesondere vorgebbaren, Musters vorgesehen ist. Das wiedergegebene gespeicherte Signal wird dem Muster - welches vorzugsweise eine Abfolge von Wiedergabeparametern ist - folgend, beispielsweise anhand der Eigenschaften, zusammengestellt. Das Muster ist in dem Nutzerprofil des Nutzers gespeichert. Es erfolgt somit eine "on demand"-Zusammenstellung. Das Muster kann dabei redaktionelle Vorgaben beziehungsweise Vorlieben des Nutzers berücksichtigen. Auf diese Weise ist es möglich, zu einem bestimmten Zeitpunkt Nachrichten (beziehungsweise ein gespeichertes Signal) zu hören, indem dies mittels des Musters vorgegeben wird. Das Informations- und Unterhaltungssystem erstellt anhand des Musters eine entsprechende Wiedergabefolge des mindestens einen gespeicherten und/oder empfangenen Signals. Das bedeutet, dass das Informations- und Unterhaltungssystem das Muster mit Inhalten füllt. Das Muster kann dabei zeitorientiert (beispielsweise Nachrichten zu einer bestimmten Zeit), eventorientiert (beispielsweise Nachrichten beim Losfahren) oder raumorientiert (Nachrichten an einem bestimmten Ort) ausgelegt sein. In letzterem Fall kann eine momentane Position des Kraftfahrzeugs beispielsweise mittels einer Navigationseinheit bestimmt werden. Zeitorientiertes, eventorientiertes und raumorientiertes Muster können sowohl relativ als auch absolut ausgeführt sein. Ein zeitorientiertes Muster kann die Möglichkeit bieten, ein bestimmtes Signal zu einer genau definierten Uhrzeit (absolut) oder nach einer bestimmten Zeit (relativ) wiederzugeben. Für ein raumorientiertes Muster kann vorgesehen sein, ein bestimmtes Signal bei Erreichen einer bestimmten Position (absolut) oder beispielsweise bei einer bestimmten Entfernung (relativ) von der Position wiederzugeben.

Eine Weiterbildung der Erfindung sieht vor, dass das Muster aus einer Liste auswählbar ist oder die Wiedergabeparameter des Musters durch den Nutzer und/oder automatisch zusammengestellt sind. Das Muster kann durch den Fahrer aus einer vorgegebenen Liste von Mustern ausgewählt werden, die beispielsweise in dem Nutzerprofil hinterlegt ist, oder aus Einzelelementen auf inhaltlicher Ebene (Nachrichten, Musik, Verkehrsnachrichten, spezielle Informationen (Wetter, Börse, Sport, und so weiter) von ihm redaktionell zusammengestellt (zeitliche Reihenfolge, Typ, Programmanteil, und so weiter) oder durch das System gelernt werden. Dies geschieht, indem der Fahrer mehrere Wiedergabeparameter auswählt und zu dem Muster zusammenfügt. Alternativ kann das Muster auch automatisch von dem Informations- und Unterhaltungssystem zusammengestellt sein. Zu diesem Zweck können Daten der Empfangseinrichtung und/oder der Sende- und Empfangseinrichtung verwendet werden. Beispielsweise können Informationen über ähnliche Signale angefordert beziehungsweise empfangen und das Muster dementsprechend zusammengestellt werden. Auch können bei dem automatischen Zusammenstellen Vorlieben des Nutzers berücksichtigt werden.

Eine Weiterbildung der Erfindung sieht vor, dass das automatische Zusammenstellen mittels eines selbstlernenden Systems durchgeführt wird, insbesondere an Hand von von dem Nutzer gewählten Signalen erfolgt. Das Lernen erfolgt dabei auf der Basis von durch den Nutzer frei gewählten Wiedergabeinhalten beziehungsweise Signalen, deren Anteil an einem Wiedergabezeitraum beziehungsweise ihrer Häufigkeit und der Wiedergabelautstärke als Maß für die Nutzerpräferenzen gewertet wird. Das System kann also bestimmen, welche Signale der Nutzer als angenehm empfindet und das Muster dementsprechend zusammenstellen beziehungsweise den Wiedergabeparameter so wählen, dass entsprechende Signale bevorzugt werden. Das so angepasste Muster wird in dem Nutzerprofil abgelegt beziehungsweise gespeichert.

Eine Weiterbildung der Erfindung sieht eine Navigationseinheit vor. Diese dient beispielsweise der Bestimmung der momentanen Position, um ein eventorientiertes Muster anzubieten. Besonders vorteilhaft ist die Navigationseinheit so in das Informations- und Unterhaltungssystem integriert, dass dessen Wiedergabesystem von der Navigationseinheit zur Wiedergabe von Navigationsinformationen verwendet wird. Die Navigationseinheit kann lediglich Mittel zur Bestimmung der momentanen Position, aber auch ein vollwertiges Navigationssystem mit Streckenführung und Routenplanung aufweisen.

Eine Weiterbildung der Erfindung sieht vor, dass das gespeicherte Signal in einem wiederbeschreibbaren Signalspeicher, insbesondere komprimiert, gespeichert ist. Die Signale werden in dem wiederbeschreibbaren Signalspeicher, beispielsweise embedded flash, SD-Speicher, USB-Stick, SSD (Solid state disk), HDD (Festplatte), und so weiter gespeichert. Dabei werden verschiedene Typen von Signalen gespeichert, beispielsweise Audio-, Video- oder Datensignale, die anschließend als gespeichertes Signal vorliegen. Besonders vorteilhaft ist es, wenn der Signalspeicher einen wahlfreien Zugriff ermöglicht, also gleichzeitig beziehungsweise in kurzer Abfolge hintereinander Lese- und Schreibzugriffe durchführen kann. Auf diese Weise kann der Signalspeicher gleichzeitig das gespeicherte Signal zu dessen Wiedergabe auslesen, als auch ein anderes Signal zum Speichern schreiben. Um Platz in dem Signalspeicher einzusparen, können die Signale auch in komprimierter Weise in dem Signalspeicher gespeichert werden, beispielsweise im MP3-Format.

Eine Weiterbildung der Erfindung sieht vor, dass eine Nutzeridentifikation zur Abstimmung des Informations- und Unterhaltungssystems auf einen Nutzer vorgesehen ist. Das Informations- und Unterhaltungssystem kann mittels der Nutzeridentifikation zwischen mehreren Nutzern unterscheiden. Dementsprechend werden die Wiedergabeparameter beziehungsweise das Nutzerprofil ausgewählt. Die Nutzeridentifikation kann beispielsweise mittels Auswahl aus einer Nutzerliste, Identifikation eines (Fahrzeug-) Schlüssels, eines Fingerabdrucksensors, und so weiter erfolgen. In Abhängigkeit von dem Nutzer ist das Nutzerprofil festgelegt und damit beispielsweise das Muster beziehungsweise die Muster gewählt und/oder der Wiedergabeparameter gesetzt. Auf diese Weise wird das Informations- und Unterhaltungssystem auf den Nutzer abgestimmt. Dabei können auch mehrere Nutzer berücksichtigt werden, die beispielsweise als Nutzerliste an das Informations- und Unterhaltungssystem übermittelt werden. Dabei kann das zur Bestimmung der Wiedergabeparameter verwendete Nutzerprofil aus Nutzerprofilen der mehreren Nutzer oder aus den Nutzern zugeordneten Wiedergabeteilparametern zusammengesetzt sein. Bei der Abstimmung werden die Nutzer-Präferenzen mit dem Bestand an gespeicherten Signalen abgeglichen und führen damit zu einer Auswahl des gespeicherten Signals, welches wiedergegeben wird. Beispielsweise wird eine Auswahl von Titeln je Kategorie gewählt. Die Reihenfolge bei der Wiedergabe des gespeicherten Signals und auch die Häufigkeit können somit nutzerbezogen (insbesondere unter Verwendung der Wiedergabeteilparameter) beeinflusst werden und dabei auch Gültigkeiten beziehungsweise Qualifizierungen berücksichtigen.

Es wird somit ein Informations- und Unterhaltungssystem für das Kraftfahrzeug beschrieben, welches verschiedene Quellenarten (Rundfunk, Audiostream, text-to-speech, Broadcast, Internet) als Signal verwenden kann. Dieses Signal wird beispielsweise mittels der Empfangseinrichtung und/oder der Sende- und Empfangseinrichtung empfangen und in dem Signalspeicher aufgezeichnet und gespeichert. Das gespeicherte Signal wird anschließend wiedergegeben. Dabei können Präferenzen des Nutzers berücksichtigt werden, ebenso wie die vorliegende Fahrsituation. Es ergibt sich somit ein personalisiertes Informations- und Unterhaltungssystem, welches auch ein Weglassen von unerwünschten Signalen (beispielsweise Werbung) und Wiederholungen ermöglicht. Dabei können verschiedene Signalquellen in Form der weiteren Geräte mit dem Informations- und Unterhaltungssystem verbunden werden. Diese sind sowohl schnurlos als auch schnurgebunden anschließbar und können Daten-, Video- und Audiosignale an das Informations- und Unterhaltungssystem übermitteln.

Dabei können der Wiedergabeparameter und/oder das Muster mit bereits vorhandenen Technologien bestimmt werden. Funktionen wie "more like this" können realisiert werden, die eine Wiedergabe des gespeicherten Signals anhand ähnlicher, den gespeicherten Signalen zugeordneten Eigenschaften ausführt. Ein Beispiel dafür ist die Wiedergabe von Signalen, welchen dasselbe Genre zugeordnet ist. Ebenso kann ein Abgleich mit Internetdiensten wie Pandora und/oder Last.Fm erfolgen. Ersterer erlaubt einen Abgleich über Signale mit gleichen signifikanten Eigenschaften, während letzterer einen Abgleich mittels ähnlicher Abspiellisten ermöglicht.

Unabhängig davon kann für die Auswahl des Wiedergabeparameters beziehungsweise des Musters auf lokale Daten oder entfernte Dienste zurückgegriffen werden. Die Verarbeitung kann dabei ganz oder teilweise in dem Informations- und Unterhaltungssystem, über ein angebundenes Portal oder (beispielsweise auch ergänzend) über ein Austauschmedium realisiert werden. Das Austauschmedium (beispielsweise USB-Stick, WLAN, und so weiter) kann dabei an dem weiteren Gerät (beispielsweise einem tragbaren Gerät) vorgesehen sein. Es wird nicht nur ein Informations- und Unterhaltungssystem beschrieben, sondern vielmehr auch ein Verfahren zum Betreiben dieses Informations- und Unterhaltungssystems.

## Patentansprüche

1. Informations- und Unterhaltungssystem zur Verwendung in einem Kraftfahrzeug, wobei das System eine Empfangseinrichtung, einen Signalspeicher zur Speicherung mindestens eines mittels der Empfangseinrichtung empfangenen Signals und ein Wiedergabeteil für eine Wiedergabe des empfangenen Signals oder des in dem Signalspeicher gespeicherten Signals aufweist, wobei ein aus mindestens zwei der gespeicherten oder empfangenen Signalen anhand von mindestens einem Wiedergabeparameter eines Nutzerprofils ausgewähltes Signal zur Wiedergabe vorgesehen ist, wobei die Wiedergabe entsprechend eines vorgebbaren Musters erfolgt, welches eine Abfolge von Wiedergabeparametern ist, **dadurch gekennzeichnet, dass** das Muster zeitorientiert, und/oder raumorientiert ist, wobei das zeitorientierte Muster die Wiedergabe eines bestimmten Signals zu einer bestimmten Uhrzeit oder nach einer bestimmten Zeit, und das raumorientierte Muster die Wiedergabe des bestimmten Signals bei Erreichen einer bestimmten Position oder einer bestimmten Entfernung von der Position vorsieht.

2. Informations- und Unterhaltungssystem nach Anspruch 1, **dadurch gekennzeichnet, dass** die Empfangseinrichtung eine Rundfunk-Empfangseinrichtung ist.

3. Informations- und Unterhaltungssystem nach einem der vorhergehenden Ansprüche, **dadurch gekennzeichnet, dass** die Dateneinleseeinrichtung eine USB-Schnittstelle, ein CD-Laufwerk oder DVD-Laufwerk oder ein Kartenleser ist.

4. Informations- und Unterhaltungssystem nach einem der vorhergehenden Ansprüche, **dadurch gekennzeichnet, dass** mittels der Sende- und Empfangseinrichtung eine Internet-Verbindung oder eine Funkverbindung herstellbar sind/ist.

5. Informations- und Unterhaltungssystem nach einem der vorhergehenden Ansprüche, **dadurch gekennzeichnet, dass** weitere Geräte mit dem Informationssystem verbindbar sind.

6. Informations- und Unterhaltungssystem nach einem der vorhergehenden Ansprüche, **dadurch gekennzeichnet, dass** die Funkverbindung eine Bluetooth-, WLAN- oder GSM-Verbindung ist.

7. Informations- und Unterhaltungssystem nach einem der vorhergehenden Ansprüche, **dadurch gekennzeichnet, dass** der Wiedergabeteil ein Ton- und/oder Bildwiedergabesystem aufweist.

8. Informations- und Unterhaltungssystem nach einem der vorhergehenden Ansprüche, **dadurch gekennzeichnet, dass** dem empfangenen Signal und dem gespeicherten jeweils mindestens eine Eigenschaft zugeordnet ist.

9. Informations- und Unterhaltungssystem nach einem der vorhergehenden Ansprüche, **dadurch gekennzeichnet, dass** die Eigenschaft mittels der Empfangseinrichtung oder einer Sende- und Empfangseinrichtung bestimmbar ist.

10. Informations- und Unterhaltungssystem nach einem der vorhergehenden Ansprüche, **dadurch gekennzeichnet, dass** die Wiedergabe des empfangenen Signals oder des gespeicherten Signals aufgrund der Eigenschaft und des Wiedergabeparameters vorgesehen ist.

11. Informations- und Unterhaltungssystem nach einem der vorhergehenden Ansprüche, **dadurch gekennzeichnet, dass** der Wiedergabeparameter in Abhängigkeit von einer Fahrsituation gewählt und/oder von einem Nutzer wählbar ist.

12. Informations- und Unterhaltungssystem nach einem der vorhergehenden Ansprüche, **dadurch gekennzeichnet, dass** die Wiedergabe eines in Textform vorliegenden Signals als Sprachsignal über das Ton-Wiedergabesystem vorgesehen ist.

13. Informations- und Unterhaltungssystem nach einem der vorhergehenden Ansprüche, **dadurch gekennzeichnet, dass** das Muster aus einer Liste auswählbar ist oder die Wiedergabeparameter des Musters durch den Nutzer oder automatisch zusammengestellt sind.

14. Informations- und Unterhaltungssystem nach einem der vorhergehenden Ansprüche, **dadurch gekennzeichnet, dass** das automatische Zusammenstellen mittels eines selbstlernenden Systems durchgeführt wird.

15. Informations- und Unterhaltungssystem nach einem der vorhergehenden Ansprüche, **gekennzeichnet durch** eine Navigationseinheit.

16. Informations- und Unterhaltungssystem nach einem der vorhergehenden Ansprüche, **dadurch gekennzeichnet, dass** das gespeicherte Signal in einem wiederbeschreibbaren Signalspeicher gespeichert ist.

17. Informations- und Unterhaltungssystem nach einem der vorhergehenden Ansprüche, **dadurch gekennzeichnet, dass** eine Nutzeridentifikation zur Abstimmung des Informations- und Unterhaltungssystems auf einen Nutzer vorgesehen ist.

## Claims

1. Information and entertainment system for use in a motor vehicle, wherein the system has a receiving device, a signal memory for storing at least one signal received by means of the receiving device and a reproduction part for reproducing the received signal or the signal stored in the signal memory, wherein a signal selected from at least two of the stored or received signals on the basis of at least one reproduction parameter of a user profile is intended for reproduction, wherein the reproduction is effected according to a prescribable pattern that is a sequence of reproduction parameters, **characterized in that** the pattern is time-oriented and/or space-oriented, wherein the time-oriented pattern provides for reproduction of a particular signal at a particular time or after a particular time and the space-oriented pattern provides for reproduction of the particular signal when a particular position or a particular distance from the position is reached.

2. Information and entertainment system according to Claim 1, **characterized in that** the receiving device is a broadcast radio receiving device.

3. Information and entertainment system according to either of the preceding claims, **characterized in that** the data read-in device is a USB interface, a CD drive or DVD drive or a card reader.

4. Information and entertainment system according to one of the preceding claims, **characterized in that** an Internet connection or a radio connection is/are able to be made by means of the transmitting and receiving device.

5. Information and entertainment system according to one of the preceding claims, **characterized in that** further appliances are connectable to the information system.

6. Information and entertainment system according to one of the preceding claims, **characterized in that** the radio connection is a Bluetooth, WLAN or GSM connection.

7. Information and entertainment system according to one of the preceding claims, **characterized in that** the reproduction part is a sound and/or image reproduction system.

8. Information and entertainment system according to one of the preceding claims, **characterized in that** the received signal and the stored signal each have at least one associated property.

9. Information and entertainment system according to one of the preceding claims, **characterized in that** the property is determinable by means of the receiving device or a transmitting and receiving device.

10. Information and entertainment system according to one of the preceding claims, **characterized in that** provision is made for the reproduction of the received signal or of the stored signal on the basis of the property and the reproduction parameter.

11. Information and entertainment system according to one of the preceding claims, **characterized in that** the reproduction parameter is selected on the basis of a driving situation and/or is selectable by a user.

12. Information and entertainment system according to one of the preceding claims, **characterized in that** provision is made for the reproduction of a signal available in text form as a voice signal via the sound reproduction system.

13. Information and entertainment system according to one of the preceding claims, **characterized in that** the pattern is selectable from a list or the reproduction parameters of the pattern are compiled by the user or automatically.

14. Information and entertainment system according to one of the preceding claims, **characterized in that** the automatic compiling is performed by means of a self-learning system.

15. Information and entertainment system according to one of the preceding claims, **characterized by** a navigation unit.

16. Information and entertainment system according to one of the preceding claims, **characterized in that** the stored signal is stored in a rewriteable signal memory.

17. Information and entertainment system according to one of the preceding claims, **characterized in that** there is provision for a user identification for matching the information and entertainment system to a user.

## Revendications

1. Système d'information et de divertissement destiné à être utilisé dans un véhicule automobile, le système possédant un dispositif de réception, une mémoire de signal destinée à mémoriser au moins un signal reçu au moyen du dispositif de réception et une partie de reproduction pour une reproduction du signal reçu ou du signal mémorisé dans la mémoire de signal, un signal sélectionné parmi au moins deux des signaux reçus ou mémorisés à l'aide d'au moins un paramètre de reproduction d'un profil d'utilisateur étant destiné à la reproduction, la reproduction s'effectuant conformément à un modèle pouvant être prédéfini, lequel est une séquence de paramètres de reproduction, **caractérisé en ce que** le modèle est orienté dans le temps et/ou orienté dans l'espace, le modèle orienté dans le temps prévoyant la reproduction d'un signal défini à une heure définie ou après un instant défini et le modèle orienté dans l'espace prévoyant la reproduction du signal défini lorsqu'une position définie ou une distance définie de la position est atteinte.

2. Système d'information et de divertissement selon la revendication 1, **caractérisé en ce que** le dispositif de réception est un dispositif de réception de radiodiffusion.

3. Système d'information et de divertissement selon l'une des revendications précédentes, **caractérisé en ce que** le dispositif de chargement de données est une interface USB, un lecteur de CD ou un lecteur de DVD ou un lecteur de cartes.

4. Système d'information et de divertissement selon l'une des revendications précédentes, **caractérisé en ce qu'**une connexion Internet ou une connexion radio peut/peuvent être établie(s) au moyen du dispositif d'émission et de réception.

5. Système d'information et de divertissement selon l'une des revendications précédentes, **caractérisé en ce que** des appareils supplémentaires peuvent être connectés au système d'information.

6. Système d'information et de divertissement selon l'une des revendications précédentes, **caractérisé en ce que** la connexion radio est une connexion Bluetooth, WLAN ou GSM.

7. Système d'information et de divertissement selon l'une des revendications précédentes, **caractérisé en ce que** la partie de reproduction possède un système de reproduction du son et/ou de l'image.

8. Système d'information et de divertissement selon l'une des revendications précédentes, **caractérisé en ce qu'**au moins une propriété est respectivement associée au signal reçu et à celui mémorisé.

9. Système d'information et de divertissement selon l'une des revendications précédentes, **caractérisé en ce que** la propriété peut être déterminée au moyen du dispositif de réception ou d'un dispositif d'émission et de réception.

10. Système d'information et de divertissement selon l'une des revendications précédentes, **caractérisé en ce que** la reproduction du signal reçu ou du signal mémorisé est prévue en fonction de la propriété et du paramètre de reproduction.

11. Système d'information et de divertissement selon l'une des revendications précédentes, **caractérisé en ce que** le paramètre de reproduction est sélectionné en fonction d'une situation de conduite et/ou peut être sélectionné par un utilisateur.

12. Système d'information et de divertissement selon l'une des revendications précédentes, **caractérisé en ce que** la reproduction d'un signal présent sous forme textuelle est prévue sous la forme d'un signal vocal par le biais du système de reproduction du son.

13. Système d'information et de divertissement selon l'une des revendications précédentes, **caractérisé en ce que** le modèle peut être sélectionné à partir d'une liste ou les paramètres de reproduction du modèle sont groupés par l'utilisateur ou automatiquement.

14. Système d'information et de divertissement selon l'une des revendications précédentes, **caractérisé en ce que** le groupement automatiquement est effectué au moyen d'un système à auto-apprentissage.

15. Système d'information et de divertissement selon l'une des revendications précédentes, **caractérisé par** une unité de navigation.

16. Système d'information et de divertissement selon l'une des revendications précédentes, **caractérisé en ce que** le signal mémorisé est mémorisé dans une mémoire de signal réinscriptible.

17. Système d'information et de divertissement selon l'une des revendications précédentes, **caractérisé en ce qu'**il existe une identification d'utilisateur destinée à régler le système d'information et de divertissement par rapport à un utilisateur.
